Europäisches Patentamt

European Patent Office

Office européen des brevets

(19)

(11) **EP 0 441 623 B1**

(12)                    **EUROPEAN PATENT SPECIFICATION**

(45) Date of publication and mention
of the grant of the patent:
**01.05.1996  Bulletin 1996/18**

(51) Int Cl.[6]: **C08L 77/06**
// C08K3/34,
C08K7/14,(C08L77/06, 63:00,
77:00)

(21) Application number: **91300995.7**

(22) Date of filing: **06.02.1991**

(54) **Process for the production of an automobile mirror stay.**

Verfahren zur Herstellung einer Spiegelhalterung für Kraftfahrzeuge.

Procédé pour la fabrication d'un support de rétroviseur automobile.

(84) Designated Contracting States:
**DE FR GB IT**

(30) Priority: **06.02.1990  JP 25075/90**

(43) Date of publication of application:
**14.08.1991  Bulletin 1991/33**

(73) Proprietor: **MITSUBISHI GAS CHEMICAL
COMPANY, INC.
Tokyo, 100 (JP)**

(72) Inventors:
• **Watanabe, Noriyoshi,
Plastics Center of Mitsubishi
Hiratsuka-shi, Kanagawa-ken (JP)**
• **Yamamiya, Kazuo, Plastics Center of Mitsubishi
Hiratsuka-shi, Kanagawa-ken (JP)**

(74) Representative: **Cresswell, Thomas Anthony et al
J.A. KEMP & CO.
14 South Square
Gray's Inn
London WC1R 5LX (GB)**

(56) References cited:
**EP-A- 0 337 443**

• **PATENT ABSTRACTS OF JAPAN vol. 14, no. 350
(C-744)(4293) 27 July 1990, & JP-A-2 127517
(TORAY INDUSTRIES,INC.) 16 May 1990,**
• **PATENT ABSTRACTS OF JAPAN vol. 14, no. 37
(C-680)(3980) 24 January 1990, & JP-A-1 272662
(MITSUBISHI GAS CHEMICAL COMPANY,INC.)
31 October 1989,**
• **PATENT ABSTRACTS OF JAPAN vol. 12, no. 92
(C-483)(2939) 25 March 1988, & JP-A- 62 223261
(MITSUBISHI GAS CHEMICAL COMPANY,INC.)
01 October 1987,**

Remarks:
The file contains technical information submitted
after the application was filed and not included in this
specification

## Description

This invention relates to a process for the production of an automobile mirror stay. More specifically, it relates to a process for the production of an automobile mirror stay comprised of a polyamide resin composition having excellent damping properties, coatability, dimensional stability and mechanical properties.

Moulded articles for use as comparatively heavy automobile parts such as an electrically driven automobile door mirror stay, a glare-resistant automobile rearview mirror, etc., are generally required to have not only damping properties but also exhibit satisfactory performance with regard to a variety of requirements including mechanical properties (strength, rigidity, etc.), coatability, surface smoothness and dimensional stability.

The raw material for automobile parts which are to meet with these requirements has been so far selected from metal materials such as zinc, etc.

Metal materials such as zinc, etc., having defects in that they require complicated surface treatment prior to coating and are heavy in spite of their excellent damping properties. It has therefore been desired to develop a door mirror stay and a rearview mirror which are formed of a plastic which is light in weight and has excellent mouldability.

In a prior application (Japanese Patent Application No. 91611/1988 corresponding to the european patent application EP-A-337443), the present inventors disclose a moulding polyamide resin composition comprising a polyamide resin, mica and a glass fibre and having excellent damping properties.

Using the moulding polyamide resin composition disclosed in the above prior application, a plastic stay for an automobile door mirror and a plastic rearview mirror have been put to practical use.

In the above prior application, the present inventors also propose the use of an ethylene-vinyl alcohol random copolymer in order to improve the coatability of the above damping resin composition, which proposal has made it possible to coat moulding polyamide resin having excellent damping properties, whereas stays are sometimes unsatisfactory in practical use, since a surface roughness on a moulded article or a decrease in mechanical strength is caused by heat deterioration during the moulding.

When an ethylene-vinyl alcohol random copolymer is incorporated into the damping resin composition, the die orifice of extruders may be clogged and the continuous compounding operation is sometimes hindered by insufficient thermal stability of the ethylene-vinyl alcohol random copolymer at melt-kneading temperature.

It is an object of this invention to provide a process for the production of an automobile mirror stay.

It is another object of this invention to provide a process for the production of an automobile mirror stay comprised of a polyamide resin composition which has excellent damping properties, coatability, mechanical properties (strength and rigidity) and surface smoothness.

Other objects and advantages of this invention will be apparent from the following description.

As a result of a thorough study, the present inventors have found that an automobile mirror stay comprised of a resin composition obtained by further incorporating an epoxy resin into a composition comprising below-specified proportions of a polyamide resin, mica and a fibrous inorganic filler has excellent damping properties, coatability, mechanical properties (strength and rigidity), surface smoothness and warpage properties and is very effective as an automobile mirror stay or an automobile rearview mirror stay. On the basis of the above finding, this invention has been completed.

The present invention therefore provides a process for the production of an automobile mirror stay which process comprises mixing:

(a) 100 parts by weight of a polyamide resin derivable from xylylenediamine comprising 60 to 100% m-xylylenediamine and 0 to 40% p-xylylenediamine as diamine component and an $\alpha,\omega$-linear aliphatic dibasic acid as dibasic acid component or
(b) 100 parts by weight of a polyamide mixture containing

(i) 40 to 99% by weight of the polyamide resin derivable from xylylenediamine as diamine component and an $\alpha,\omega$-linear aliphatic dibasic acid as dibasic acid component and
(ii) 60 to 1% by weight of, as a second polyamide, nylon 66, the weight of percentages being based on the total amount of the two polyamides,

(c) 1 to 20 parts by weight of an epoxy resin and
(d) a filler comprising

(i) 20 to 200 parts by weight of mica having an average particle diameter of not more than 200 $\mu$m or a mica composition in massive form comprising mica having an average particle diameter of not more than 200 $\mu$m and 0.01 to 10 parts by weight of a resin binder per 100 parts by weight of the mica, and
(ii) 5 to 250 parts by weight of a fibrous filler; and moulding the composition thus obtained.

The invention also provides an automobile mirror stay obtainable by such a process.

In this invention, the term "automobile mirror stay" means a connecting structure with which to fix a mirror element of a door mirror or a rearview mirror onto an automobile body, or a mirror unit that the structure and the mirror unit structure are integrally formed.

The polyamide resin used in this invention contains xylylenediamine component as the diamine component and an $\alpha,\omega$-linear aliphatic dibasic acid component as the dibasic acid component.

In such a polyamide resin (to be referred to as "MX nylon" hereinafter), the diamine component comprises a m-xylylenediamine component alone or a combination of not less than 60% by weight of a m-xylylenediamine component and not more than 40% by weight of p-xylylenediamine, and the dibasic acid component is derived from an $\alpha,\omega$-linear aliphatic dibasic acid component having 6 to 20 carbon atoms, such as adipic acid, sebacic acid, suberic acid, dodecanoic acid, eicodionic acid, etc.

The above MX nylon can be produced, e.g. by a polycondensation reaction of substantially equimolar amounts of a diamine and a dibasic acid.

In view of the balance between mouldability and performance of a moulded article, adipic acid is particularly preferred among the above $\alpha,\omega$-linear aliphatic dibasic acids for the synthesis of MX nylon.

The epoxy resin used in this invention improves the coatability of the polyamide resin composition.

This epoxy resin can be selected, for example, from among the glycidyl ether type, the glycidyl ester type, the glycidylamine type, the alicyclic resin and the heterocyclic epoxy resin. These epoxy resins may be used alone or in combination.

Examples of the glycidyl ether type epoxy resins are resin prepared from epichlorohydrin and bisphenol A, resin prepared from epichlorohydrin and bisphenol F, a phenol novolak type epoxy resin prepared by reacting a phenol novolak resin with epichlorohydrin, an o-cresol novolak type resin prepared by reacting a o-cresol novolak resin with epichlorohydrin and a so-called brominated epoxy resin derived from epichlorohydrin and tetrabromobisphenol A.

Examples of the glycidylamine type epoxy resins are epoxy resins prepared from epichlorohydrin and aniline, diaminodiphenylmethane, p-aminophenol, m-xylylenediamine or 1,3-bis(aminomethyl)cyclohexane.

Examples of the glycidyl ester type epoxy resins are epoxy resins prepared from epichlorohydrin and phthalic acid, tetrahydrophthalic acid, p-oxybenzoic acid, or dimer acid.

Alicyclic epoxy resins are compounds having a cyclohexene oxide group, a tricyclodecene oxide group, or a cyclopentene oxide group.

Heterocyclic epoxy resins are epoxy resins prepared from epichlorohydrin and hydantoin or isocyanuric acid.

Among the above epoxy resins, the glycidyl ether type, the glycidyl ester type and the glycidylamine type epoxy resins are preferred although that preference depends on the coating composition to be used.

The amount of the epoxy resin used is 1 to 20 parts by weight, preferably 2 to 10 parts by weight, per 100 parts by weight of the polyamide resin.

When the amount of the epoxy resin is less than 1 part by weight per 100 parts by weight of the polyamide resin, no sufficient effect is exhibited in terms of the improvement in adhesion of a coating. When said amount is more than 20 parts by weight, moldability, heat resistance, mechanical properties, rigidity, etc. are impaired.

The mica used in this invention improves the performance of the polyamide resin composition to a great extent in several respects. Specifically, the incorporation of the mica remarkably improves the polyamide resin composition in damping properties, rigidity, warpage properties and surface smoothness.

The mica for use in this invention can be selected from muscovite, phlogopite, biotite, etc., although the mica used need not be limited to these.

The mica is used as a powder having an average particle diameter of not more than 200 μm. When the average particle diameter is not more than 200 μm, a molded article having excellent surface smoothness can be obtained.

The amount of the mica is 20 to 200 parts by weight, and preferably 50 to 150 parts by weight per 100 parts by weight of the polyamide resin.

When the amount of the mica per 100 parts by weight of the polyamide resin is less than 20 parts by weight, the mica contributes little to the improvement of the polyamide resin composition in rigidity, warpage properties or damping properties. When the said amount exceeds 200 parts by weight, the moldability and surface smoothness of the polyamide resin composition may be impaired.

Further, in this invention, the mica having an average particle diameter of not more than 200 μm can be used by preparing it in massive form with a resin binder. When the mica is used in massive form, the resin binder used produces a remarkable effect on improvement of the coatability of the molded article.

The massive form in the above case means such various forms as pellets, spheres, etc. The size of the massive form is not specially limited, but in general, is preferably less than 5 mm.

When the resin composition is produced, for example, by feeding the mica powder through the hopper of a molding machine, it is not easy to obtain a homogeneous resin composition if the mica has a small average particle diameter, but it is possible to obtain such a resin composition by feeding the mica through the hopper in massive form.

The resin binder used to prepare the mica in massive form can be selected, for example, from among acrylic resin, vinyl acetate resin, styrene resin, epoxy resin, polyvinyl alcohol and urethane resin. The amount of the resin binder for use is 0.01 to 10 parts by weight per 100 parts by weight of the mica.

When the amount of the resin binder is smaller, the massive form of the mica may disintegrate prematurely. When the said amount is larger, the dispersibility of the mica in the polyamide resin composition is impaired.

In order to improve compatibility and adhesion, the mica may be surface-treated with a surface treating agent such as a silane coupling agent, a titanate coupling agent or the like prior to the adding of the resin binder for preparation of the mica in massive form.

The fibrous filler for use in this invention can be selected, for example, from glass fiber, potassium titanate or calcium sulfate whiskers, carbon fiber, alumina fiber, etc.

Of the fibrous fillers above, glass fiber is preferred. Glass fiber is most generally used, and there are a wide variety of commercially available glass fibers to choose from.

The potassium titanate whiskers are, in general, preferably selected from those having a fiber length of 5 to 70 µm and an average fiber diameter of 0.1 to 2 µm.

The calcium sulfate whiskers are, in general, preferably selected from those having a fiber length of 20 to 100 µm and an average fiber diameter of 1 to 10 µm.

The carbon fiber is preferably selected from those having an average diameter of 5 to 20 µm, and the alumina fiber is preferably selected from those having an average diameter of 1 to 20 µm.

The above inorganic fillers may be surface-treated with a surface treating agent such as a silane coupling agent, a titanate coupling agent, or the like, or they may be left untreated. The inorganic fillers which are surface-treated with a surface treating agent are preferred to improve the coatability further.

The amount of the fibrous filler for use in this invention per 100 parts by weight of the polyamide resin is 5 to 250 parts by weight and preferably 50 to 150 parts by weight.

When the amount of the fibrous filler for use per 100 parts by weight of the polyamide resin is less than 5 parts by weight, the improvement of the resin composition in terms of mechanical properties, thermal properties, etc., is limited. When said amount is more than 250 parts by weight, molding processability is impaired.

In this invention, particulate and flaky inorganic fillers may be incorporated as a reinforcing filler. The selection of particulate and flaky inorganic fillers is not specially limited as long as they are usable as a reinforcing material, and they may be used in combination.

The particulate or flaky inorganic filler can be selected from talc, wollastonite, kaolin clay, calcium carbonate, glass beads, glass flakes, etc.

The average particle diameter of these particulate or flaky inorganic fillers is preferably not more than 150 µm and more preferably not more than 50 µm.

Even when particulate or flaky fillers having an average particle diameter of more than 150 µm are incorporated into the polyamide resin, the effect on the improvement in mechanical strength and rigidity is low.

When a glass fibre as a fibrous filler and a particulate or flaky inorganic filler are used in combination, a moulded article having good mechanical properties can be obtained by incorporating 5 to 120 parts by weight of the glass fibre and 5 to 120 parts by weight of the particulate or flaky inorganic filler per 100 parts by weight of the polyamide resin.

According to a further study by the present inventors, it has been also found that the use in combination of MX nylon with nylon 66 can provide a polyamide resin composition having improved mouldability, particularly permitting a decrease in moulding cycle time as compared with the use of MX nylon alone.

This invention, therefore, further includes a process for the production of an automobile mirror stay which process comprises mixing 100 parts by weight of a polyamide mixture containing (i) 40 to 99% by weight of a polyamide resin containing xylylenediamine component as defined herein as the diamine component and an α,ω-linear aliphatic dibasic acid component as the dibasic acid component and (ii) 60 to 1% by weight of nylon 66 based on the total amount of these two components with 1 to 20 parts by weight of an epoxy resin, 20 to 200 parts by weight of mica and 5 to 250 parts by weight of a fibrous filler, and moulding the composition thus obtained.

As far as a decrease in moulding cycle time during production is concerned, the amount of nylon 66 relative to MX nylon can be effectively selected from a " wide range. However, in view of various performance criteria, the optimum proportion of MX nylon is 40 to 99% by weight and that of nylon 66 is 60 to 1% by weight as described above, provided that the total is 100% by weight.

When the amount of the nylon 66 per 99 parts by weight of MX nylon is less than 1 part by weight, the effect of the nylon 66 on improvement in the mouldability of the MX nylon is small. When the amount of the nylon 66 per 40 parts by weight of MX nylon is more than 60 parts by weight, there is sometimes a decrease in physical performance and dimensional stability based on moisture absorption.

The proportions of MX nylon and nylon 66 are preferably 60 to 99 and 40 to 1 and more preferably 70 to 95 and 30 to 5, respectively.

Both of the above polyamide resin compositions used in this invention can be produced by melt-kneading all the components in an extruder at a temperature higher than the melting point of the employed polyamide resins by 5 to 50°C and pelletising the kneaded product.

The polyamide resin composition used in this invention may further contain additives such as a stabiliser against deterioration by oxidation, heat, ultraviolet light, etc., a nucleating agent, a plasticiser, a releasing agent, a flame retardant, an antistatic agent, a lubricant.

Further, the polyamide resin composition used in this invention may contain silicon carbide whiskers, an alumina-silica ceramic fibre, barium stearate, carbon black, zinc oxide, as required to the extent that these additives do not impair the objectives of this invention.

The automobile mirror stay of this invention can be produced from any of the above polyamide resin compositions by moulding the compositions according to known methods.

The automobile mirror stay prepared by the process of this invention has excellent damping properties, mechanical properties (strength and rigidity), coatability, surface smoothness and dimensional stability, and as such is very useful and beneficial.

As the result of the addition of the epoxy resin to the polyamide resin composition used in this invention, the automobile mirror stay prepared by the process of this invention is remarkably improved, in particular, in coatability as compared with an automobile mirror stay produced from a polyamide resin composition containing an ethylene-vinyl alcohol random copolymer. That is, the automobile mirror stay has an excellent appearance and in particular a good weld portion appearance (namely, the occurrence of surface roughness due to gas generation is rare) for the moulded articles. As a result, the automobile mirror stay also has excellent adhesion to coating compositions.

That excellent coatability is exhibited, for example, in the case of applying an ordinary coating composition such as a polyester urethane-based or acrylurethane-based two package polyurethane resin coating composition, a moisture-curing polyurethane resin coating composition, an oxidation type polyurethane resin coating composition, a lacquer polyurethane resin coating composition, an aminoalkyd resin coating composition, or an epoxy resin coating composition. Of the above coating compositions, polyester urethane-based and acrylurethane-based coating compositions are especially preferred.

Further, because of the addition of the epoxy resin, the polyamide resin composition used in this invention has excellent thermal stability over compositions containing ethylene-vinyl alcohol random copolymers. Therefore, the polyamide resin composition used in this invention also has the characteristic feature that the die orifices of extruders are rarely clogged during compounding of the polyamide resin composition.

EXAMPLES:

This invention will be further specifically explained hereinafter by reference to Examples and Comparative Examples. The methods for measuring properties, etc., are as follows.

(1) Mechanical properties:

The mechanical properties were measured according to the following methods.

| | |
|---|---|
| Tensile strength: | ASTM D638 |
| Tensile elongation: | ASTM D638 |
| Flexural strength: | ASTM D790 |
| Flexural modulus: | ASTM D790 |

(2) Damping properties:

A test piece having a width of 12 mm, a thickness of 3 mm and a length of 215 mm was prepared, and one end of the test piece was fixed. A weight of 500 g was attached to the other end of the test piece, and a strain gauge was set at a site 60 mm away from the fixed end. When the weighted end of test piece was manually pushed down and then released, the change in vibration was measured using the strain gauge.

The logarithmic damping ratio (6) and specific damping coefficient (S.D.C (%)) were calculated by the following equations.

$$\delta = 1/n \ell n \, (A_o/A_n)$$

$$S.D.C = (1-e^{-2\delta}) \times 100$$

wherein n is the frequency of the measured vibration, $A_o$ is the initial amplitude, and $A_n$ is the amplitude of the "n-th" vibration.

(3) Coatability:

Evaluated by conducting a crosscut test.

A coating composition, a urethane resin (Rethane PG60 No. 101, supplied by Kansai Paint Co., Ltd.) or an acrylurethane resin (Origiplate Z, supplied by Origin Electric Co., Ltd.) was applied to a test piece so that the resultant coating had a thickness of 50 μm, and then cured at 80°C for 30 minutes. Thereafter, the coating was cut lengthwise and crosswise eleven times each at intervals of 1 mm with a cutter knife to provide 100 squares (1 mm x 1 mm).

A cellophane adhesive tape (Cellotape CT-18, supplied by Nichiban Co., Ltd.) was applied to the squares and detached, and the number of remaining squares was counted.

The crosscut test was also carried out on a test piece sample which after the above curing treatment had been immersed in warm water having a temperature of 40°C for 10 days.

(4) Warpage properties:

A square test piece (film gate) having a length of 90 mm, a width of 90 mm and a thickness of 1.5 mm was fixed in the center and measured for the degree of planarity with a three-dimensional measuring instrument (Microcord A-121, supplied by Mitsutoyo Manufacturing Co., Ltd.).

(5) Surface smoothness:

Evaluated visually.

○ : good (a surface was beautiful, smooth and shining.)
Δ : slightly good (a surface was rough to some extent and had some bumps and depressions).

(6) Thermal stability during the molding:

A molding material was allowed to remain in the cylinder of an injection molding machine for a predetermined period of time and then, was molded into square bars having a size of 6 x 12.7 x 127 mm. The cylinder temperature was set at 280°C, and the residence time was set at 0, 15 or 30 minutes after the plasticization.

The square bars were measured for flexural strength and flexural modulus and visually evaluated on molded article appearance.

Example 1

100 Parts by weight of poly(m-xylylene adipamide) (to be referred to as "nylon MXD6" hereinafter, relative viscosity: 2.14, supplied by Mitsubishi Gas Chemical Company, Inc.), 50 parts by weight of pelletized nylon 66 (relative viscosity: 2.25), 125 parts by weight of glass fiber chopped strands having a length of 3 mm (CS03 JAFT-2, supplied by Asahi Fiberglass Co., Ltd.), 200 parts by weight of powdered mica having an average particle diameter of 90 μm (B-82, supplied by Yamaguchi Mica Co., Ltd.) and 10 parts by weight of an epoxy resin (Epo-tohto YD-5013, supplied by Tohto Kasei Co., Ltd) were mixed in a tumbler, melt-kneaded at 280°C in a vent-type extruder, and then extruded into the form of a strand. The extrudate was cooled in a water bath, cut and dried to produce a molding material in pellet form.

The above melt-kneading was carried out at a temperature of 280°C which was 5 to 10°C higher than a conventional injection-molding temperature. The die orifices of the vent-type extruder were not at all clogged after 10 hours of continuous operation.

The above molding material was then injection-molded at a mold temperature of 130°C to provide a test piece. The test piece was tested for physical properties, damping properties, coatability (with Rethane PG60 No. 101, supplied by Kansai Paint Co., Ltd.), warpage properties and surface smoothness Table 1 shows the results.

Example 2

A molded article was produced by repeating Example 1 except that mica prepared by binding powdered mica having an average particle diameter of 6.2 μm with a urethane resin binder and pelletizing (A-21PG, supplied by Yamaguchi Mica Co., ltd.) was used.

In this Example, a urethane resin (Rethane PG60 No. 101, supplied by Kansai Paint Co., Ltd.) was used for the coatability test.

Table 1 shows the test results for the molded article.

### Example 3

A resin composition shown in Table 1 was treated in the same way as in Example 2 to prepare a molding material in pellet form and obtain a molded article.

In this Example, a urethane resin (Rethane PG60 No. 101, supplied by Kansai Paint Co., Ltd.) was used for the coatability test.

Table 1 shows the test results for the molded article.

Further, Table 3 shows the results of the thermal stability test during the molding.

### Example 4

A molding material in a pellet form was obtained by repeating Example 1 except that 8 parts by weight of Epikote 517 (supplied by Yuka Shell Epoxy Kabushiki Kaisha) and 2 parts by weight of Epikote 180S65 (supplied by Yuka Shell Epoxy Kabushiki Kaisha) were used as the epoxy resin.

The above molding material was molded in the same way as in Example 2 to provide a molded article.

In this Example, an acrylurethane resin (Origiplate Z, supplied by Origin Electric Co., Ltd.) was used for the coatability test.

Table 1 shows the test results on the molded article.

Table 1

| Example No. | 1 | 2 | 3 | 4 |
|---|---|---|---|---|
| Resin composition | | | | |
| Nylon MXD6 (part by weight) | 100 | 100 | 100 | 100 |
| Nylon 66 (ditto) | 50 | 50 | 13 | 50 |
| Epoxy resin (ditto) | 10*1 | 10*1 | 4*1 | 10*3 |
| Mica (ditto) | 200 | 200*2 | 75*2 | 200 |
| Glass fiber (ditto) | 125 | 125 | 65 | 125 |
| (1) Mechanical properties | | | | |
| Tensile strength (kg/cm$^2$) | 1,530 | 1,500 | 1,700 | 1,540 |
| Tensile elongation (%) | 0.7 | 0.7 | 1.0 | 0.7 |
| Flexural strength (kg/cm$^2$) | 2,350 | 2,260 | 2,450 | 2,350 |
| Flexural modulus (10$^3$kg/cm$^2$) | 213 | 205 | 210 | 213 |
| (2) Damping properties | | | | |
| Logarithmic damping rate ($\delta$) | 0.08 | 0.10 | 0.07 | 0.07 |
| Specific damping coefficient (S.D.C.) (%) | 14.8 | 18.1 | 13.1 | 13.1 |
| (3) Coatability | | | | |

*1:- Epoxy resin used: Epo-tohto YD-5013, a product of Tohto Kasei Co., Ltd.

*3:- Epoxy resins used: 8 parts by weight of Epikote 517 (a product of Yuka Shell Epoxy K.K.) and 2 parts by weight of Epikote 180S65 (a product of Yuka Shell Epoxy K.K.)

*2:- Mica prepared by binding powdered mica having an average particle diameter of 6.2 μm with a urethane resin binder and pelletizing it.

EP 0 441 623 B1

Table 1  (continued)

| Example No. | 1 | 2 | 3 | 4 |
|---|---|---|---|---|
| Before immersion in warm water | 100 | 100 | 100 | 100 |
| After immersion in warm water | 100 | 100 | 100 | 100 |
| (4) Warpage properties (mm) | 0.08 | 0.07 | 0.07 | 0.08 |
| (5) Surface smoothness (visual) | ○ | ○ | ○ | ○ |

Comparative Example 1

A molding material in pellet form was prepared by repeating Example 1 except that no mica was used. Then, this molding material was treated in the same way as in Example 1 to provide a molded article.

In this Comparative Example, a urethane resin (Rethane PG60 No. 101, supplied by Kansai Paint Co., Ltd.) was used for the coatability test.

Table 2 shows the test results for the molded article.

Comparative Example 2

A molding material in pellet form was prepared by repeating Example 1 except that mica and epoxy resin were not used. Then, this molding material was treated in the same way as in Example 1 to provide a molded article.

In this Comparative Example, a urethane resin (Rethane PG60 No. 101, supplied by Kansai Paint Co., Ltd.) was used for the coatability test.

Table 2 shows the test results for the molded article.

Comparative Example 3

A molding material in pellet form was prepared by repeating Example 4 except that 5 parts by weight of an ethylene-vinyl alcohol random copolymer (Eval EP-F101, an ethylene content: 32 mol%, supplied by Kuraray Inc.) was used in place of the epoxy resin.

The melt-kneading was carried out at a cylinder temperature of 280°C. However, the die oriffices of the extruder were easily clogged, and needed to be cleaned every five hours or so.

The reason for the above easily clogged die oriffices is considered to be that the ethylene-vinyl alcohol random copolymer has low thermal stability.

The test results for thermal stability during molding are shown in Table 3.

Table 2

| Example No. | 1 | 2 |
|---|---|---|
| Resin composition | | |
|    Nylon MXD6 (part by weight) | 100 | 100 |
|    Nylon 66 (ditto) | 50 | 50 |
|    Epoxy resin (ditto) | 10*4 | - |
|    Mica (ditto) | - | - |
|    Glass fiber (ditto) | 125 | 125 |
| (1) Mechanical properties | | |
|    Tensile strength (kg/cm$^2$) | 2,060 | 2,100 |
|    Tensile elongation (%) | 2.2 | 1.95 |

*4: Epoxy resin used: Epo-tohto YD-5013, supplied by Tohto Kasei Co., Ltd.

Continuation of the Table on the next page

Table 2   (continued)

| Example No. | 1 | 2 |
|---|---|---|
| Flexural strength (kg/cm$^2$) | 2,870 | 2,900 |
| Flexural modulus (10$^3$kg/cm$^2$) | 132 | 160 |
| (2) Damping properties | | |
| Logarithmic damping rate ($\delta$) | 0.05 | 0.04 |
| Specific damping coefficient (S.D.C.) (%) | 9.5 | 7.7 |
| (3) Coatability | | |
| Before immersion in warm water | 100 | 80 |
| After immersion in warm water | 100 | 60 |
| (4) Warpage properties (mm) | 0.18 | 0.20 |
| (5) Surface smoothness (visual) | $\Delta$ | $\Delta$ |

Table 3

| Residence time (minute)[*5] | Evaluation points | Example 3 | Comparative Example 3 |
|---|---|---|---|
| 0 | Flexural strength (kg/cm$^2$) | 2,260 | 2,250 |
| | Flexural modulus (10$^3$kg/cm$^2$) | 205 | 200 |
| | Appearance of molded article | smooth and glossy | smooth and glossy |
| 5 | Flexural strength (kg/cm$^2$) | 2,260 | 2,250 |
| | Flexural modulus (10$^3$kg/cm$^2$) | 205 | 200 |
| | Appearance of molded article | smooth and glossy | slight roughness |
| 15 | Flexural strength (kg/cm$^2$) | 2,080 | 1,780 |
| | Flexural modulus (10$^3$kg/cm$^2$) | 199 | 188 |
| | Appearance of molded article | smooth and glossy | rougness partially |
| 30 | Flexural strength (kg/cm$^2$) | 1,950 | 1,700 |
| | Flexural modulus (10$^3$kg/cm$^2$) | 197 | 188 |
| | Appearance of molded article | smooth and glossy | roughness totally |

*5: residence time in an injection molding machine cylinder

## Claims

1.   A process for the production of an automobile mirror stay which process comprises mixing:

(a) 100 parts by weight of a polyamide resin derivable from xylylenediamine comprising 60 to 100% m-xylylenediamine and 0 to 40% p-xylylenediamine as diamine component and an α,ω-linear aliphatic dibasic acid as dibasic acid component or

(b) 100 parts by weight of a polyamide mixture containing

(i) 40 to 99% by weight of the polyamide resin derivable from xylylenediamine as diamine component and an α,ω-linear aliphatic dibasic acid as dibasic acid component and

(ii) 60 to 1% by weight of, as a second polyamide, nylon 66, the weight of percentages being based on the total amount of the two polyamides,

(c) 1 to 20 parts by weight of an epoxy resin and

(d) a filler comprising

(i) 20 to 200 parts by weight of mica having an average particle diameter of not more than 200 μm or a mica composition in massive form comprising mica having an average particle diameter of not more than 200 μm and 0.01 to 10 parts by weight of a resin binder, per 100 parts by weight of the mica, and

(ii) 5 to 250 parts by weight of a fibrous filler; and moulding the composition thus obtained.

2. A process according to claim 1 wherein the said epoxy resin is at least one of glycidyl ether epoxy resin, glycidyl ester epoxy resin, glycidylamine epoxy resin, and epoxy resins having a cyclohexene oxide group, a tricyclodecene oxide group or a cyclopentene oxide group, and epoxy resins prepared from epichlorohydrin and hydantoin or isocyanuric acid.

3. A process according to claim 1 or 2, wherein the fibrous filler is a glass fibre.

## Patentansprüche

1. Verfahren zur Herstellung eines Kraftfahrzeugspiegelhalter, umfassend das Vermischen von

(a) 100 Gewichtsteilen eines Polyamidharzes, ableitbar von Xylylendiamin, umfassend 60 bis 100 % m-Xylylendiamin und 0 bis 40 % p-Xylylendiamin als Diaminkomponente und eine lineare aliphatische α,ω-zweibasische Säure als zweibasische Säurekomponente, oder

(b) 100 Gewichtsteile eines Polyamidgemisches, enthaltend

(i) 40 bis 99 Gew.-% des Polyamidharzes, ableitbar von Xylylendiamin als Diaminkomponente und einer linearen aliphatischen α,ω-zweibasischen Säure als zweibasische Säurekomponente, und

(ii) 60 bis 1 Gew.-% als zweites Polyamid von Nylon 66, wobei die Gewichtsprozente auf der Gesamtmenge der beiden Polyamide beruhen,

(c) 1 bis 20 Gewichtsteile eines Epoxyharzes, und

(d) eines Füllstoffs, umfassend

(i) 20 bis 200 Gewichtsteile Glimmer mit einem mittleren Teilchendurchmesser von nicht mehr als 200 μm oder einer Glimmermasse in massiver Form, umfassend Glimmer mit einem mittleren Teilchendurchmesser von nicht mehr als 200 μm und 0,01 bis 10 Gewichtsteile eines Harzbinders auf 100 Gewichtsteile des Glimmers, und

(ii) 5 bis 250 Gewichtsteile eines faserförmigen Füllstoffs, und Formen der so erhaltenen Masse.

2. Verfahren nach Anspruch 1, wobei das Epoxyharz mindestens ein Glycidyletherepoxyharz, Glycidylesterepoxyharz, Glycidylaminepoxyharz und Epoxyharz mit einer Cyclohexenoxidgruppe, einer Tricyclodecenoxidgruppe oder einer Cyclopentenoxidgruppe und ein Epoxyharz, hergestellt aus Epichlorhydrin und Hydantoin oder Isocyanursäure ist.

3. Verfahren nach Anspruch 1 oder 2, wobei der faserförmige Füllstoff Glasfasern ist.

**Revendications**

1. Procédé de production d'un support de rétroviseur d'automobile, qui comprend le mélange de :

   (a) 100 parties en poids d'une résine polyamide que l'on peut obtenir à partir de xylylènediamine renfermant 60 à 100% de m-xylylènediamine et 0 à 40% de p-xylylènediamine, en tant que constituant diamine, et d'un acide aliphatique linéaire $\alpha,\omega$-dicarboxylique, en tant que constituant diacide, ou
   (b) 100 parties en poids d'un mélange de polyamides contenant :

      (i) 40 à 99% en poids de la résine polyamide que l'on peut obtenir à partir de xylylènediamine en tant que constituant diamine et d'un acide aliphatique linéaire $\alpha,\omega$-dicarboxylique en tant que constituant diacide, et
      (ii) 60 à 1% en poids de nylon 66 en tant que second polyamide, les pourcentages en poids étant basés sur la quantité totale des deux polyamides,

   (c) 1 à 20 parties en poids d'une résine époxy, et
   (d) une charge comprenant:

      (i) 20 à 200 parties en poids de mica présentant un diamètre moyen de particule ne dépassant pas 200 µm ou d'une composition de mica sous forme massive, renfermant du mica présentant un diamètre moyen de particule ne dépassant pas 200 µm et 0,01 à 10 parties en poids d'un liant constitué d'une résine, pour 100 parties en poids du mica, et
      (ii) 5 à 250 parties en poids d'une charge fibreuse,
         et le moulage de la composition ainsi obtenue.

2. Procédé selon la revendication 1, dans lequel ladite résine époxy est au moins une résine choisie parmi les résines époxy du type éther glycidylique, les résines époxy du type ester glycidylique, les résines époxy du type glycidylamine, les résines époxy possédant un groupe oxyde de cyclohexène, un groupe oxyde de tricyclodécène ou un groupe oxyde de cyclopentène, et les résines époxy obtenues à partir d'épichlorhydrine et d'hydantoïne ou d'acide isocyanurique.

3. Procédé selon la revendication 1 ou 2, dans lequel la charge fibreuse est une fibre de verre.